# EUROPÄISCHE PATENTSCHRIFT

(11) **EP 3 047 936 B1**
(45) Veröffentlichungstag und Bekanntmachung des Hinweises auf die Patenterteilung: **20.02.2019**
(21) Anmeldenummer: 15197759.2
(22) Anmeldetag: 03.12.2015
(51) Int. Cl.: B32B 5/18, B32B 15/04, B32B 15/18, F16P 1/02, B23K 26/70, F16P 1/06

(54) **VERFAHREN ZUR ABSCHIRMUNG EINER LASERSTRAHLQUELLE**
LASER SHIELDING METHOD
PROCEDE DE BLINDAGE D'UNE SOURCE DE RAYON LASER

(30) Priorität: 16.12.2014 DE 102014118739
(43) Veröffentlichungstag der Anmeldung: 27.07.2016
(73) Patentinhaber: Bergmann & Steffen GmbH, 32139 Spenge (DE)
(72) Erfinder: Bergmann, Uwe, 49326 Melle (DE); Wohner, Andreas, 32289 Rödinghausen (DE)
(74) Vertreter: Ter Meer Steinmeister & Partner

(56) Entgegenhaltungen:
- EP-A1- 2 153 931
- DE-C1- 19 629 037
- GB-A- 1 595 201
- US-A1- 2004 022 296

## Beschreibung

Die Erfindung betrifft ein Verfahren zur Abschirmung eines eine Laserstrahlquelle enthaltenden Sicherheitsbereiches mittels einer Schutzwand, die eine Absorptionsschicht aus einem verkohlbaren Material und auf der der Laserstrahlquelle zugewandten Seite der Absorptionsschicht eine Metallschicht aufweist.

Laserstrahlquellen und Laserstrahlen werden in weitem Umfang zur Materialbearbeitung eingesetzt, beispielsweise zum Schweißen, Schneiden oder zur Oberflächenbehandlung von Metallen und anderen Werkstoffen. Die Laserstrahlquelle ist dabei zumeist an einem Manipulator angeordnet, beispielsweise einem Roboterarm, mit dem der Laserstrahl auf die zu bearbeitenden Stellen der Werkstücke gerichtet werden kann.

Dabei kann es jedoch zu Fehlfunktionen kommen, mit der Folge, dass die Laserstrahlung unkontrolliert in die Umgebung emittiert wird, ggf. auch durch unbeabsichtigte Reflexion des Laserstrahls an einer Oberfläche des Werkstücks oder eines anderen in der Nähe befindlichen Objekts.

Da die üblicherweise verwendeten Laserstrahlen eine hohe Leistung in der Größenordnung von einigen kW und eine hohe Energiedichte in der Größenordnung von einigen MW/mm² im Fokus haben, stellen die Laserstrahlquellen ein erhebliches Gefährdungspotential dar.

Es ist deshalb Vorschrift, das um die Laser-Bearbeitungsstation herum ein Sicherheitsbereich gebildet wird, der mit für die Laserstrahlung undurchdringlichen Schutzwänden abgeschirmt wird.

Aus Kostengründen ist man bemüht, die Abmessungen des Sicherheitsbereiches möglichst klein zu halten. Das hat jedoch zur Folge, dass die Laserstrahlen kaum defokussiert sind und noch eine hohe Energiedichte aufweisen, wenn sie auf die Schutzwand auftreffen. Die Schutzwand muss deshalb so beschaffen sein, dass ein Durchbrennen des Laserstrahls, auch bei Dauerbestrahlung stets desselben Punktes, zumindest für eine gewisse Zeit zuverlässig verhindert wird. In vielen Fällen wird eine Standzeit von 100 s verlangt (Schutzklasse T2).

Die Schutzwände, die diesen Anforderungen genügen, müssen eine hinreichende Dicke aufweisen und aus widerstandsfähigen Materialien bestehen und sind deshalb verhältnismäßig schwer und teuer.

Aus US 2004022296 A1 ist eine Laserschutzwand bekannt, die eine verhältnismäßig dicke Kunststoffschicht als tragenden Grundkörper aufweist, auf der an der Seite, die dem Laserstrahl zugewandt ist, eine Metallschicht angebracht ist. Dabei ist die Metallschicht so dimensioniert, dass sie dem Laserstrahl hinreichend lange standhält. Die Kunststoffschicht dient nur zur mechanischen Verstärkung und zur Wärmedämmung, damit die Schutzwand auch bei lokaler Dauerbestrahlung auf der Außenseite nicht zu heiß wird.

Aus DE 196 29 037 C1 ist eine Schutzwand bekannt, die aus zwei parallel und in Abstand zueinander angeordneten Metallblechen gebildet wird, von denen dasjenige, das der Laserstrahlquelle zugewandt ist, eine die Laserstrahlung absorbierende Beschichtung aufweist, während das auf der Außenseite angeordnete Metallblech so beschaffen ist, dass es die entstehende Wärmestrahlung möglichst gut reflektiert. Auch hier muss das Metallblech auf der Innenseite so dimensioniert sein, dass es dem Laserstrahl standhält.
Aus DE 10 2006 003 450 A1 ist eine Laserschutzwand bekannt, die einen Kern aus Schaumstoff aufweist, an dem auf beiden Seiten Metallschichten sowie ggf. weitere Schichten zur Absorption der Laserstrahlung angebracht sind.

Aus GB 1 595 201 A ist eine Schutzwand aus Polykarbonat bekannt, das unter der Wirkung der Laserstrahlung verkohlt.

Aufgabe der Erfindung ist es, ein Verfahren anzugeben, das eine sichere Abschirmung der Laserstrahlquelle mit einer dünneren, leichteren und/oder kostengünstigeren Schutzwand ermöglicht.

Diese Aufgabe wird erfindungsgemäß dadurch gelöst, dass die Metallschicht in Abhängigkeit von der Energiedichte des Laserstrahls so dimensioniert wird, das sie dem Laserstrahl bei Dauerbestrahlung so lange standhält, bis in der angrenzenden Absorptionsschicht eine Verkohlung auf Grund der von dem Laserstrahl in der Metallschicht erzeugten Wärme eingesetzt hat, und die Metallschicht dann von dem Laserstrahl durchbrochen wird.

Bei dem erfindungsgemäßen Verfahren erfolgt somit die Abschirmung nicht durch die Metallschicht auf der Innenseite der Schutzwand, sondern letztendlich durch die Absorptionsschicht aus verkohlbarem Material. Als "verkohlbar" soll dabei ein Material bezeichnet werden, das sich unter Wärmeeinwirkung chemisch umwandelt und dabei einen festen, kohleartigen Rückstand bildet. Dieser kohleartige Rückstand absorbiert die Laserstrahlung besser als das ursprüngliche Material, hat jedoch andererseits eine sehr geringe Wärmeleitfähigkeit, so dass, wenn sich erst einmal eine verkohlte Schicht gebildet hat, das darunter liegende Material wirksam gegen die Laserstrahlung geschützt wird. Die Metallschicht hat den Zweck, den Verkohlungsprozess zu initiieren und ein Entweichen des verkohlten Materials zu verhindern. Dazu genügt eine verhältnismäßig dünne Metallschicht, so dass Kosten und Gewicht eingespart werden. Die Absorptionsschicht hat dagegen allgemein eine größere Dicke, so dass eine hohe Standzeit gegenüber der Laserstrahlung und zugleich eine hohe mechanische Stabilität der Schutzwand erreicht wird, kann jedoch dabei eine verhältnismäßig geringe Dichte haben, so dass das Flächengewicht der Schutzwand insgesamt klein bleibt.

Vorteilhafte Ausgestaltungen und Weiterbildungen der Erfindung ergeben sich aus den Unteransprüchen.

Im folgenden wird ein Ausführungsbeispiel der Erfindung anhand der Zeichnungen näher erläutert.

Es zeigen:
- Fig. 1: einen schematischen Schnitt durch einen mit Schutzwänden abgeschirmten Sicherheitsbereich, der eine Laserstrahlquelle enthält;
- Fig. 2: einen vergrößerten Schnitt durch eine der Schutzwände an einer Auftreffstelle eines Laserstrahls; und
- Fig. 3: einen Schnitt analog zu Fig. 2 für einen Zustand, in dem der Laserstrahl tiefer in die Schutzwand eingedrungen ist.

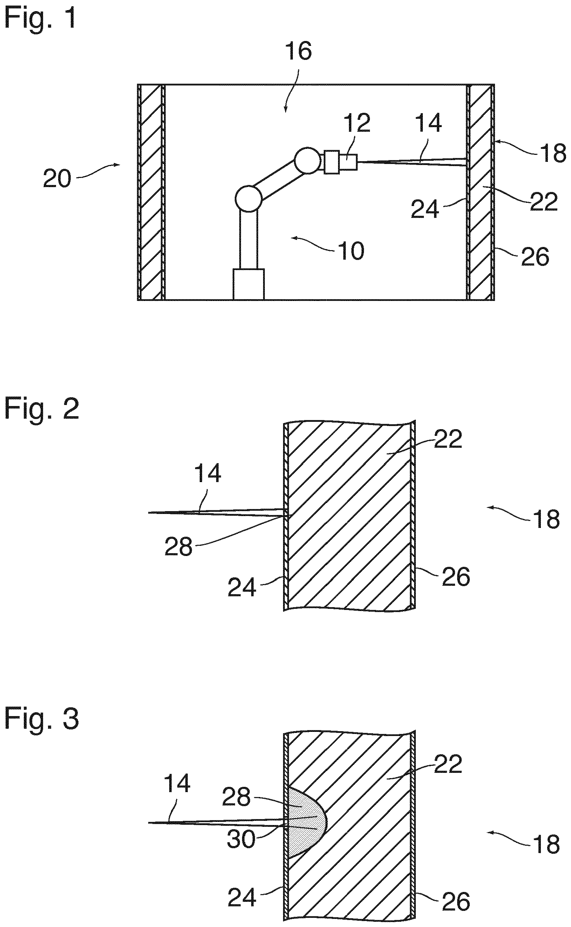

In Fig. 1 ist als Beispiel für eine Laser-Bearbeitungsstation ein Schweißroboter 10 gezeigt, der eine Laserstrahlquelle 12 als Schweißkopf aufweist. Um zu verhindern, dass ein von der Laserstrahlquelle 12 emittierter Laserstrahl 14, wenn er aus irgendeinem Grund nicht auf das zu bearbeitende Werkstück trifft, unkontrolliert in die Umgebung abgestrahlt wird, ist um den Schweißroboter 10 herum ein Sicherheitsbereich 16 gebildet, der nach außen durch Schutzwände 18 abgeschirmt ist. Die Schutzwände 18 bilden eine ringsum geschlossene Schutzzelle 20, die gerade groß genug ist, die Laser-Bearbeitungsstation und die zu bearbeitenden Werkstücke aufzunehmen.

Die Schutzwand 18 weist eine Absorptionsschicht 22 aus einem verkohlbaren Material auf. Unmittelbar angrenzend an diese Absorptionsschicht 22 ist auf der Innenseite der Schutzwand eine Metallschicht 24 angebracht. Im gezeigten Beispiel ist auf der Außenseite der Schutzwand eine zusätzliche Metallschicht 26 angebracht.

Beim Aufbau der Schutzzelle für die Laserstrahlquelle 12 werden die Materialien und Dicken der Absorptionsschicht 22 und der Metallschicht 24 in Abhängigkeit vom Spektrum und der Leistung bzw. der Energiedichte des Laserstrahls 14 so ausgewählt, dass die Schutzwand 18 dem Laserstrahl auch bei Dauerbestrahlung für eine vorgegebene Standzeit, beispielsweise 100 s, standhält. Unter Dauerbestrahlung soll dabei eine Situation verstanden werden, bei der der Laserstrahl 14 dauernd auf denselben Punkt auf der Metallschicht 24 auftrifft. Die Schutzwand 18 wird so konzipiert, dass die Metallschicht 24 zwar von dem Laserstrahl 14 durchbrochen werden kann, der Laserstrahl sich jedoch innerhalb der vorgegebenen Standzeit nicht vollständig durch die Absorptionsschicht 26 hindurch brennen kann. Das Funktionsprinzip wird nachstehend anhand der Fig. 2 und 3 erläutert.

Fig. 2 illustriert eine Situation, in der der Laserstrahl 14 erstmals auf eine zunächst noch intakte Schutzwand 18 auftrifft. In der Metallschicht 24 wird ein Teil der Energie des auftreffenden Laserstrahls absorbiert, so dass sich die Metallschicht lokal erhitzt. Da die Metallschicht 24 nur eine begrenzte Dicke hat, ist die Wärmeleitung in der Ebene der Metallschicht begrenzt. Insgesamt sind deshalb die Wärmeverluste durch Wärmeleitung und Wärmeabstrahlung am Auftreffpunkt des Laserstrahls geringer als der Energieeintrag durch den Laserstrahl, so dass sich die Metallschicht 24 am Auftreffpunkt weiter erhitzt. Das hat zur Folge, dass aufgrund der Wärmeeinwirkung in der angrenzenden Oberflächenzone der Absorptionsschicht 22 ein Verkohlungsprozess einsetzt.

Das Material der Absorptionsschicht wird dabei thermisch zersetzt. Es entstehen einerseits Verbrennungsgase oder Dämpfe, die, da die Metallschicht 24 noch in Takt ist, in das vorzugsweise poröse Material der Absorptionsschicht 22 diffundieren. Außerdem bildet sich ein kohleartiger fester Rückstand, der am Ort des Verkohlungsprozesses verbleibt und dort einen festen Pfropf 28 bildet.

Die Wärmeleitfähigkeit dieses Pfropfes 28 ist deutlich geringer als die des ursprünglichen Materials der Absorptionsschicht 22, so dass die Wärme des Laserstrahls noch schlechter aus der Metallschicht 24 abgeleitet werden kann. Nach einer gewissen Zeit, beispielsweise nach 1 bis 10 Sekunden, hat deshalb der Laserstrahl 14 ein Loch 30 in die Metallschicht 24 geschmolzen, wie in Fig. 3 gezeigt ist. Der Laserstrahl 14 trifft nun unmittelbar auf den kohleartigen Pfropf 28, der für die Laserstrahlung eine hohe Absorptionsfähigkeit hat und sich deshalb weiter erhitzt. Das hat zur Folge, dass der Verkohlungsprozess in der Absorptionsschicht 22 fortschreitet und der Pfropf 28 wächst. Da das entstehende kohleartige Material porös und/oder bröckelig ist, kann ein Teil der entstehenden Gase nun auch durch das Loch 30 austreten, so dass sich der Laserstrahl 14 sowohl unmittelbar vor der Metallschicht 24 als auch innerhalb des Pfropfes 28 durch Rauch oder heißes Gas ausbreiten muss, das einen Teil der Laserstrahlung absorbiert und außerdem den Laserstrahl defokussiert.

Da jedoch der Durchmesser des Loches 30 kaum größer ist als der Querschnitt des Laserstrahls, ist die Metallschicht 24 am Rand des Loches 30 nach wie vor in der Lage, das verkohlte Material des Pfropfes 28 zurückzuhalten, so dass dieses Material nicht mit der Strömung des Gases ausgeblasen wird, sondern weiter in dem Pfropf 28 verbleibt und somit einen immer größeren Teil der Laserstrahlung absorbiert.

Außerdem sorgt die geringe Wärmeleitfähigkeit des kohleartigen Materials des Pfropfes 28 dafür, dass sich die Wärmeenergie des Laserstrahls nur langsam in Richtung auf die Außenseite der Schutzwand ausbreiten kann. Mit fortschreitender Tiefe des Pfropfes 28 wird deshalb der Verkohlungsprozess mehr und mehr verzögert, und die dabei auftretende Gasentwicklung ist nicht so heftig, dass größere Mengen an verkohltem Material durch das Loch 30 ausgeblasen werden.

Wenn der Pfropf 28 eine gewisse Tiefe erreicht hat, immer noch in deutlichem Abstand zu der Metallschicht 26 auf der Außenseite, wird der Laserstrahl 14 so stark geschwächt, dass der Verkohlungsprozess - zumindest in Richtung auf die Außenseite der Schutzwand - zum Erliegen kommt. Der Pfropf 28 wächst dann nur noch in der Breite, und die Wärme des Laserstrahls wird durch Wärmestrahlung, durch Wärmeleitung und Verdampfung des noch unverkohlten Materials der Absorptionsschicht 22 und zum teil durch Wärmeleitung in der Metallschicht 24 abgeführt.

Der geschilderte Mechanismus bewirkt somit, dass der Laserstrahl 14 schließlich in der Absorptionsschicht 22 "stecken bleibt", so dass im Prinzip eine unendliche Standzeit erreichbar ist. Wesentlich ist dabei, dass die Metallschicht 24 in der in Fig. 2 dargestellten Phase die Entstehung des Pfropfes 28 initiiert und verhindert, dass das feste Material dieses Pfropfes aufgrund der Gasentwicklung sofort weggeschleudert wird. Auch im weiteren Verlauf des Prozesses hält die Metallschicht 24 das verkohlte Material in Position und bewirkt somit eine Selbstverstärkung der Laserabsorption.

Bei dem Material der Absorptionsschicht 22 handelt es sich vorzugsweise um einen Kunststoff, der bei der Wellenlänge des Laserlichts absorbierend ist, insbesondere einen Schaumkunststoff, beispielsweise einen porösen Hartschaum, der auch im nicht verkohlten Zustand nur eine geringe Wärmeleitfähigkeit hat. Besonders geeignet sind beispielsweise Polyurethan und Polyisocyanurat. Es können jedoch auch verkohlbare Naturstoffe als Absorptionsschicht verwendet werden. Der Begriff "verkohlbar" soll im übrigen nicht implizieren, dass das Material Kohlenstoff enthalten muss. Entscheidend ist nur, dass bei thermischer Zersetzung ein fester Rückstand entsteht, der bei der Frequenz des Laserstrahls eine hohe Absorptionsfähigkeit hat. Außerdem sollte die Wärmeleitfähigkeit nicht zu groß sein.

Die Dicke der Absorptionsschicht 22 kann beispielsweise 40 bis 100 mm betragen.

Bei der Metallschicht 24 handelt es sich beispielsweise um ein Stahlblech. Die Dicke kann je nach Material der Metallschicht und Leistung des Laserstrahls beispielsweise zwischen 0,1 und 3 mm betragen. Je größer die Leistung des Laserstrahls ist, desto größer sollte die Dicke der Metallschicht 24 und auch die Dicke der Absorptionsschicht 22 gewählt werden.

Die Metallschicht 26 auf der Außenseite der Schutzwand hat im wesentlichen nur den Zweck, das Schaumstoffmaterial der Absorptionsschicht 22 gegen mechanische Beschädigung und das Eindringen von Feuchtigkeit zu schützen (die Metallschicht 24 auf der Innenseite hat unter anderem auch die gleiche Funktion). Die Dicke der Metallschicht 26 ist in der gleichen Größenordnung wie die Dicke der Metallschicht 24 und kann mit dieser übereinstimmen oder auch größer oder kleiner sein.

### Versuchsbeispiel

Als Laserstrahlquelle 12 wurde ein Faserlaser mit einer Wellenlänge von 1070 nm und einer Leistung von 5,8 kW verwendet. Die Optik hatte eine Brennweite von 460 mm. Die maximale Intensität des Laserstrahls auf der Schutzwand betrug 3,1 MW/m².

Die Schutzwand 18 war eine Sandwichplatte mit einer 80 mm dicken PIR-Schaumfüllung als Absorptionsschicht 22, einem 0,4 mm dicken Stahlblech als Metallschicht 24 auf der Innenseite und einem 0,6 mm dicken Stahlblech als Metallschicht 26 auf der Außenseite. Dabei ergab sich ein Flächengewicht der Schutzwand von etwa 12 kg/m².

Der Abstand zwischen der Laserstrahlquelle 12 und der Schutzwand 18 betrug in einem Versuch 920 mm und in einem anderen Versuch 1380 mm, was einem normgerechten Prüfaufbau und dem einfachen bzw. doppelten Fokusabstand entsprach.

Der Laserstrahl wurde dauernd auf denselben Punkt der Schutzwand gerichtet. Nach einer Zeitdauer von - geschätzt - etwa 10 s hatte der Laserstrahl die Metallschicht 24 durchbrochen. Nach einer Gesamt-Bestrahlungsdauer von 5 min wurden die Versuche jeweils abgebrochen. Zu diesem Zeitpunkt hatte der Laserstrahl in keinem Fall die Schutzwand durchdrungen.

## Patentansprüche

1. Verfahren zur Abschirmung eines eine Laserstrahlquelle (12) enthaltenden Sicherheitsbereiches (16) mittels einer Schutzwand (18), die eine Absorptionsschicht (22) aus einem verkohlbaren Material und auf der der Laserstrahlquelle (12) zugewandten Seite der Absorptionsschicht eine Metallschicht (24) aufweist, **dadurch gekennzeichnet, dass** die Metallschicht (24) in Abhängigkeit von der Energiedichte des Laserstrahls (14) so dimensioniert wird, dass sie dem Laserstrahl bei Dauerbestrahlung so lange standhält, bis in der angrenzenden Absorptionsschicht (22) eine Verkohlung aufgrund der von dem Laserstrahl in der Metallschicht erzeugten Wärme eingesetzt hat, und die Metallschicht (24) dann von dem Laserstrahl durchbrochen wird.

2. Verfahren nach Anspruch 1, bei dem das verkohlbare Material der Absorptionsschicht (22) ein Kunststoff ist.

3. Verfahren nach Anspruch 1 oder 2, bei dem das Material der Absorptionsschicht (22) ein Schaumstoff ist.

4. Verfahren nach einem der vorstehenden Ansprüche, bei dem die Metallschicht (24) ein Stahlblech ist.

5. Verfahren nach einem der vorstehenden Ansprüche, bei dem die Dicke der Absorptionsschicht (22) für einen Laserstrahl mit einer Leistung zwischen 3 und 10 kW zwischen 40 und 100 mm beträgt.

6. Verfahren nach Anspruch 5, bei dem die Dicke der Absorptionsschicht (22) für einen Laserstrahl mit einer Leistung zwischen 5 und 6,5 kW zwischen 70 und 80 mm beträgt.

7. Verfahren nach einem der vorstehenden Ansprüche, bei dem die Dicke der Metallschicht (24) für einen Laserstrahl mit einer Leistung zwischen 3 und 10 kW zwischen 0,1 und 1,0 mm beträgt.

8. Verfahren nach Anspruch 7, bei dem die Dicke der Metallschicht (24) für einen Laserstrahl mit einer Leistung zwischen 5 und 6,5 kW zwischen 0,3 und 0,6 mm beträgt.

## Claims

1. A method of shielding a working range (16) that contains a laser source (12) by means of a shielding wall (18) that has an absorption layer (22) made of a material that can be charred, and a metal layer (24) on the side of the absorption layer that faces the laser source (12), **characterized in that** the metal layer is dimensioned as a function of the energy density of the laser beam (14) such that it withstands continuous irradiation by the laser beam until, due to the heat that the laser beam has generated in the metal layer, charring has started in the adjacent absorption layer (22), and the metal layer (24) is then pierced by the laser beam.

2. The method according to claim 1, wherein the material of the absorption layer (22) that can be charred is plastics.

3. The method according to claim 1 or 2, wherein the material of the absorption layer (22) is a foamed material.

4. The method according to any of the preceding claims, wherein the metal layer (24) is a steel sheet.

5. The method according to any of the preceding claims, wherein the thickness of the absorption layer (22) for a laser beam with a power between 3 and 10 kW is between 40 and 100 mm.

6. The method according to claim 5, wherein the thickness of the absorption layer (22) for a laser beam with a power between 5 and 6.5 kW is between 70 and 80 mm.

7. The method according to any of the preceding claims, wherein the thickness of the metal layer (24), for a laser beam having a power between 3 and 10 kW is between 0.1 and 1.0 mm.

8. The method according to claim 7, wherein the thickness of the metal layer (24), for a laser beam having a power between 5 and 6.5 kW is between 0.3 and 0.6 mm.

## Revendications

1. Procédé pour protéger une zone de sécurité (16) contenant une source de faisceau laser (12) au moyen d'une paroi de protection (18), comportant une couche d'absorption (22) constituée d'un matériau carbonisable et une couche métallique (24) sur le côté de la couche d'absorption dirigé vers la source de faisceau laser (12), **caractérisé en ce que** la couche métallique (24) est dimensionnée en fonction de la densité d'énergie du faisceau laser (14), de sorte qu'elle résiste au faisceau laser en cas de rayonnement continu jusqu'à ce qu'une carbonisation ait commencé dans la couche d'absorption contigue (22) en raison de la chaleur produite par le faisceau laser dans la couche métallique, et que la couche métallique (24) est ensuite rompue par le faisceau laser.

2. Procédé selon la revendication 1, dans lequel le matériau carbonisable de la couche d'absorption (22) est une matière plastique.

3. Procédé selon la revendication 1 ou 2, dans lequel le matériau de la couche d'absorption (22) est un matériau en mousse.

4. Procédé selon l'une des revendications précédentes, dans lequel la couche métallique (24) est une tôle d'acier.

5. Procédé selon l'une des revendications précédentes, dans lequel l'épaisseur de la couche d'absorption (22) pour un faisceau laser ayant une puissance comprise entre 3 et 10 kW est comprise entre 40 et 100 mm.

6. Procédé selon la revendication 5, dans lequel l'épaisseur de la couche d'absorption (22) pour un faisceau laser ayant une puissance comprise entre 5 et 6,5 kW est comprise entre 70 et 80 mm.

7. Procédé selon l'une des revendications précédentes, dans lequel l'épaisseur de la couche métallique (24) pour un faisceau laser ayant une puissance comprise entre 3 et 10 kW est comprise entre 0,1 et 1,0 mm.

8. Procédé selon la revendication 7, dans lequel l'épaisseur de la couche métallique (24) pour un faisceau laser ayant une puissance comprise entre 5 et 6,5 kW est comprise entre 0,3 et 0,6 mm.
